# FASCICULE DE BREVET EUROPEEN

(11) **EP 1 048 515 B1**
(45) Date de publication et mention de la délivrance du brevet: **06.10.2004**
(21) Numéro de dépôt: 00401171.4
(22) Date de dépôt: 27.04.2000
(51) Int. Cl.: B60N 2/46

(54) **Console à accoudoir pour un habitacle de véhicule automobile**
Konsolenarmlehne für einen Kraftfahrzeuginnenraum
Console armrest for a motor vehicle interior

(30) Priorité: 28.04.1999 FR 9905388
(43) Date de publication de la demande: 02.11.2000
(73) Titulaire: ECIA INDUSTRIE, 92100 Boulogne (FR)
(72) Inventeur: Riviere, Caroline, 25700 Valentigney (FR); Galmiche, Etienne, 25230 Seloncourt (FR)
(74) Mandataire: Jacobson, Claude

(56) Documents cités:
- EP-A- 0 587 014
- DE-A- 4 328 054
- DE-A- 4 415 732
- DE-A- 4 419 407
- DE-U- 29 702 837
- US-A- 5 527 084

## Description

La présente invention concerne une console à accoudoir pour un habitacle de véhicule automobile.

On connaît déjà dans l'état de la technique une console pour un habitacle de véhicule automobile, du type s'étendant longitudinalement à proximité d'au moins un siège du véhicule et comprenant un accoudoir, pour un occupant du siège, muni d'une embase et d'au moins un organe d'appui du coude de l'occupant. Une console comprenant les caractéristiques du préambule de la revendication 1 est connue par exemple de EP-A-587 014.

L'invention a pour but de proposer une console du type précité munie de moyens simples et économiques d'adaptation à différentes morphologies d'utilisateur.

A cet effet, l'invention a pour objet une console pour un habitacle de véhicule automobile, du type précité, dans laquelle l'accoudoir comprend
une armature comportant une lame pliée de façon à présenter deux ailes sensiblement longitudinales inférieure et supérieure sollicitées élastiquement à l'écart l'une de l'autre par un effet ressort de la lame, l'aile inférieure étant solidaire de l'embase, l'aile supérieure étant solidaire de l'organe d'appui, et
des moyens de réglage de l'écartement des deux ailes.

Suivant d'autres caractéristiques de cette console :
- l'aile supérieure est fendue longitudinalement de façon à présenter deux branches sensiblement longitudinales, chaque branche étant sollicitée élastiquement à l'écart de l'aile inférieure par l'effet ressort de la lame et portant un organe d'appui de coude ;
- les moyens de réglage d'écartement comprennent un dispositif de réglage discontinu à denture et cliquet, la denture étant portée par une première des ailes et s'étendant sensiblement verticalement entre les ailes inférieure et supérieure, et le cliquet étant porté par la seconde des ailes ;
- la denture et le cliquet sont assujettis l'un à l'autre par une force élastique de rappel de la denture ou du cliquet, les moyens de réglage comprenant de plus des moyens de séparation de la denture et du cliquet s'opposant à la force élastique de rappel de la denture ou du cliquet ;
- les moyens de réglage d'écartement comprennent un dispositif de réglage discontinu associé à chaque branche d'aile supérieure ;
- la denture et le cliquet sont ménagés chacun dans une découpe d'aile ou une partie d'aile partiellement découpée ;
- la denture est ménagée dans une partie partiellement découpée de l'aile qui la porte redressée sensiblement verticalement ;
- la denture est ménagée dans une partie de la première des ailes partiellement découpée et est rappelée élastiquement vers le cliquet par un effet ressort de cette partie de la première des ailes, le cliquet étant délimité par une découpe de la seconde des ailes ;
- la découpe est délimitée par une languette souple partiellement découpée dans la seconde des ailes ;
- les moyens de séparation de la denture et du cliquet comprennent des moyens de traction de la denture, à l'encontre de sa force élastique de rappel, portés par l'embase ;
- la denture est ménagée dans une partie de la première des ailes partiellement découpée, et en ce que le cliquet est ménagé dans une partie de la seconde des ailes partiellement découpée et est rappelé élastiquement vers la denture par un effet ressort de cette partie de la seconde des ailes ;
- les moyens de séparation de la denture et du cliquet comprennent un levier de traction du cliquet à l'encontre de sa force élastique de rappel relié à ce cliquet par une tringle, le levier et la tringle étant ménagés dans des parties partiellement découpées de la seconde des ailes ;
- l'accoudoir forme un couvercle d'obturation d'un réceptacle agencé dans la console, la lame étant articulée autour d'un axe sensiblement transversal à la console et lié à un corps de cette console ;
- la lame est montée pivotante autour de son axe d'articulation au moyen d'un palier ménagé dans une partie partiellement découpée de cette lame, à proximité de la jonction des deux ailes ;
- la lame est métallique, notamment en acier à ressort.

L'invention a également pour objet un véhicule automobile caractérisé en ce qu'il est muni d'une console telle que définie ci-dessus.

L'invention sera mieux comprise à la lecture de la description qui va suivre donnée uniquement à titre d'exemple et faite en se référant aux dessins dans lesquels :
- les figures 1 à 6 sont des vues de la console selon l'invention dans différentes configurations de cette dernière, les figures impaires étant des vues en perspective et les figures paires étant des vues en coupe longitudinale de la console représentée sur les figures impaires ;
- la figure 7 est une vue en perspective de l'armature de l'accoudoir de la console représentée sur les figures précédentes ;
- la figure 8 est une vue similaire à la figure 7 montrant une variante de réalisation de l'armature ;
- la figure 9 est une vue de détail, à échelle agrandie, d'une partie de l'armature représentée sur la figure 8.

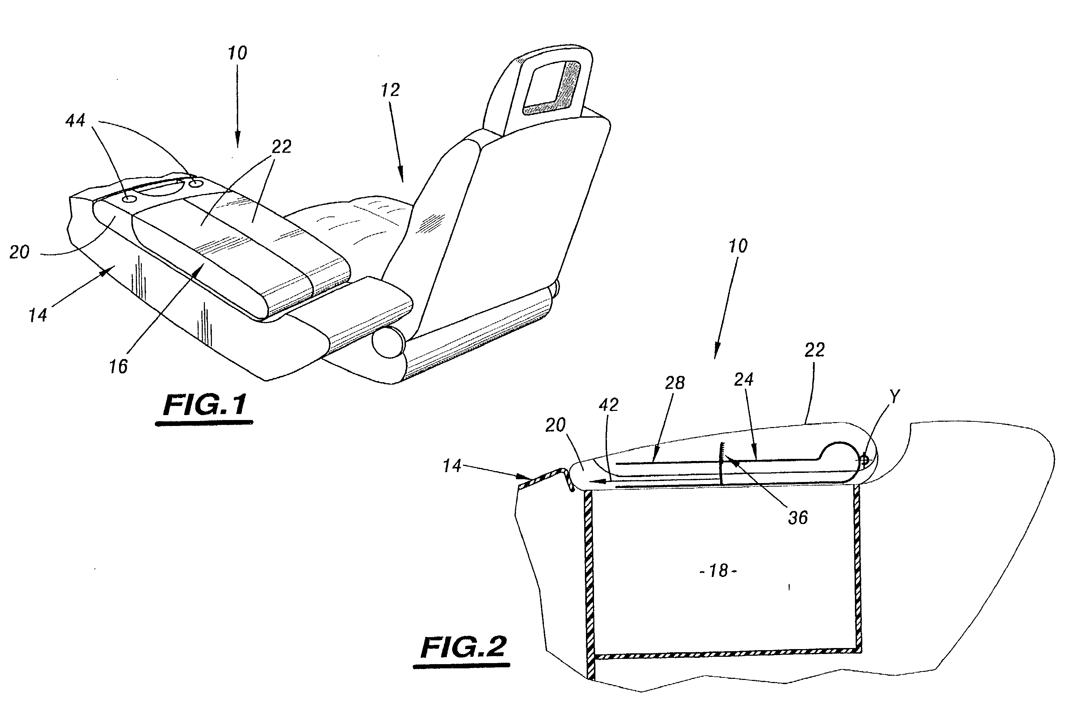

On a représenté sur les figures 1 à 6 une console 10 selon l'invention pour un habitacle de véhicule automobile. Dans ce qui suit, les orientations avant, arrière, gauche, droite, inférieure et supérieure sont considérées par rapport aux orientations habituelles d'un conducteur du véhicule.

La console 10 s'étend longitudinalement entre deux sièges avant 12 du véhicule dont un seul est représenté sur la figure 1.

La console 10 comprend un corps 14 portant un accoudoir 16 pour les occupants des sièges 12. Cet accoudoir 16 est articulé autour d'un axe Y sensiblement transversal à la console 10 de manière à former un couvercle d'obturation d'un réceptacle 18 agencé dans le corps 14 de la console. L'axe Y, lié au corps 14, s'étend à l'arrière de l'accoudoir 16.

L'accoudoir 16 comporte une embase 20 et au moins un organe 22 d'appui du coude d'un occupant d'un des sièges avant 12. Dans l'exemple illustré, l'accoudoir 16 comporte deux organes d'appui 22 gauche et droit, s'étendant sensiblement longitudinalement, affectés respectivement aux occupants des sièges avant gauche et droit.

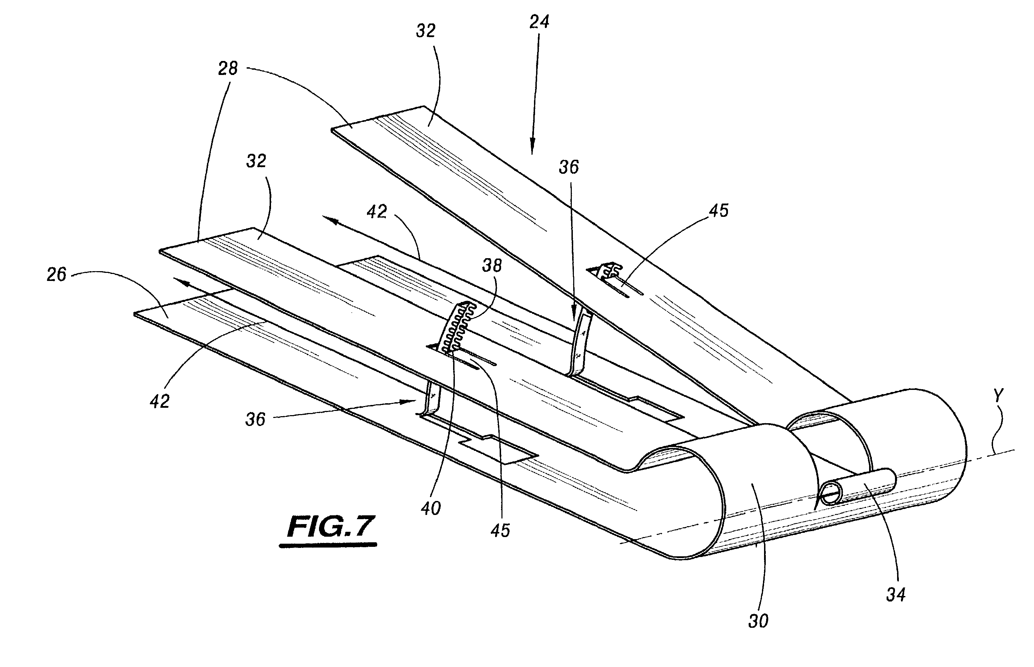

L'accoudoir 16 comprend également une armature qui est illustrée plus en détail sur la figure 7. Cette armature comporte une lame 24 pliée de façon à présenter deux ailes sensiblement longitudinales inférieure 26 et supérieure 28. La lame est de préférence métallique, en particulier en acier à ressort.

Les deux ailes 26, 28 seront reliées entre elles par leur extrémité arrière, formant un pli 30 de la lame, et sont sollicitées élastiquement à l'écart l'une de l'autre par un effet ressort de cette lame.

L'aile inférieure 26 est solidaire de l'embase 20. L'aile supérieure 28 est fendue longitudinalement de façon à présenter deux branches 32 sensiblement longitudinales. Chaque branche 32 est sollicitée élastiquement à l'écart de l'aile inférieure 26 par l'effet ressort de la lame 24 et porte un organe 22 d'appui du coude d'un occupant d'un siège avant. Chaque branche 32 est solidaire de l'organe d'appui 22 qu'elle porte.

La lame 24 est montée pivotante autour de l'axe Y au moyen d'un palier 34 ménagé par enroulement d'une partie partiellement découpée de la lame 24 disposée à proximité de la jonction des deux ailes 26, 28.

L'accoudoir 16 comprend encore des moyens de réglage de l'écartement des deux ailes 26, 28, de façon à pouvoir abaisser ou relever les organes d'appui 22, comme cela sera décrit plus en détail par la suite, afin d'adapter l'accoudoir à des morphologies différentes d'utilisateur.

De préférence, ces moyens de réglage comprennent deux dispositifs de réglage discontinu 36 associés chacun à une branche correspondante 32 de l'aile supérieure 28, de façon à pouvoir régler de manière indépendante l'écartement de chaque branche 32 par rapport à l'aile inférieure 26.

Le dispositif de réglage 36 comprend une denture 38, portée par l'aile inférieure 26, et un cliquet 40, porté par une branche 32 de l'aile supérieure 28. La denture 38 s'étend sensiblement verticalement entre les ailes 26, 28.

En variante, le cliquet 40 peut être porté par l'aile inférieure 26, la denture 38 étant portée, dans ce cas, par une branche 32 de l'aile supérieure 28.

La denture 38 est ménagée par exemple dans une partie de l'aile inférieure 26 qui est partiellement découpée et redressée sensiblement verticalement par rapport au reste de cette aile 26.

Le cliquet 40 est délimité par exemple par une découpe de la branche 32 plus particulièrement par le bord d'un orifice découpé dans la branche 32, à travers lequel s'étend la denture 38.

La denture 38 est rappelée élastiquement en position d'assujettissement au cliquet 40 par un effet ressort de la partie d'aile partiellement découpée dans laquelle est ménagée cette denture 38.

La denture 38 est écartée du cliquet 40 par des moyens classiques de traction de cette denture 38 à l'encontre de sa force élastique de rappel. Ces moyens de traction comprennent, par exemple, un câble 42 ou une tringlerie actionné par un bouton de commande 44 porté par l'extrémité avant de l'embase 20 (voir figures 1 et 2).

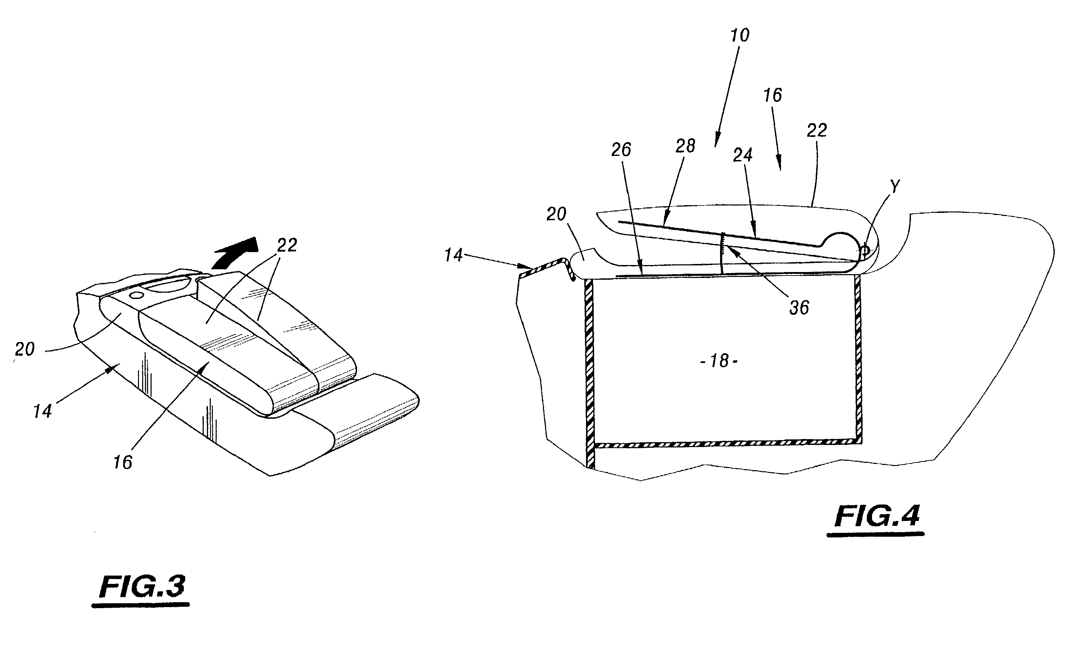

On notera que le bord de l'orifice délimitant le cliquet 40, en contact avec la denture 38 lorsque celle-ci est assujettie au cliquet 40, est formé par une languette souple 45 partiellement découpée dans la branche 32. De ce fait, lorsque l'organe d'appui droit 22 est dans sa position relevée telle que représentée sur la figure 3, une pression excessive exercée par un utilisateur sur cet organe d'appui 22 provoque une déformation de la languette 45 et ainsi une libération de la denture 38 par rapport au cliquet 40 ayant pour effet d'abaisser l'organe d'appui 22 dans sa position sensiblement horizontale illustrée sur la figure 1. Le dispositif de réglage 36 n'est pas détérioré pour autant et peut fonctionner à nouveau. Ainsi, le dispositif de réglage 36 ne se détériore pas en cas de pression excessive exercée sur l'organe d'appui 22 en position relevée.

On décrira ci-dessous les principaux aspects du fonctionnement de l'accoudoir 16 de la console selon l'invention.

Initialement, l'accoudoir 16 est dans une position sensiblement horizontale d'obturation du réceptacle 18, telle que représentée sur les figures 1 et 2. Les deux ailes 26, 28 de l'armature sont dans une position d'écartement minimal. Les organes d'appui 22 sont dans une position abaissée sensiblement horizontale. L'utilisateur, assis par exemple sur le siège avant droit 12 illustré sur la figure 1, peut appuyer son coude sur l'organe d'appui droit 22 de l'accoudoir.

Lorsque l'utilisateur souhaite relever cet organe d'appui 22, il actionne les moyens de traction 42 à l'aide du bouton 44 de façon à séparer la denture 38 du cliquet 40 porté par la branche 32 correspondante. Cette branche 32 et l'organe d'appui 22 qu'elle porte se soulèvent alors à cause de l'effet ressort de la lame qui a tendance à écarter la branche supérieure 28 de la branche inférieure 26 (voir figures 3, 4 et 7).

L'utilisateur contrôle le soulèvement de l'organe d'appui 22 en exerçant une pression sur ce dernier, à l'encontre de l'effet ressort de la lame 24, à l'aide de son coude ou de son bras.

Lorsque la hauteur souhaitée de l'organe d'appui 22 est atteinte, l'utilisateur relâche le bouton de commande 44 si bien que la denture 38 est rappelée élastiquement en position d'assujettissement avec le cliquet 40, de manière à immobiliser l'organe d'appui 22 dans la position sélectionnée.

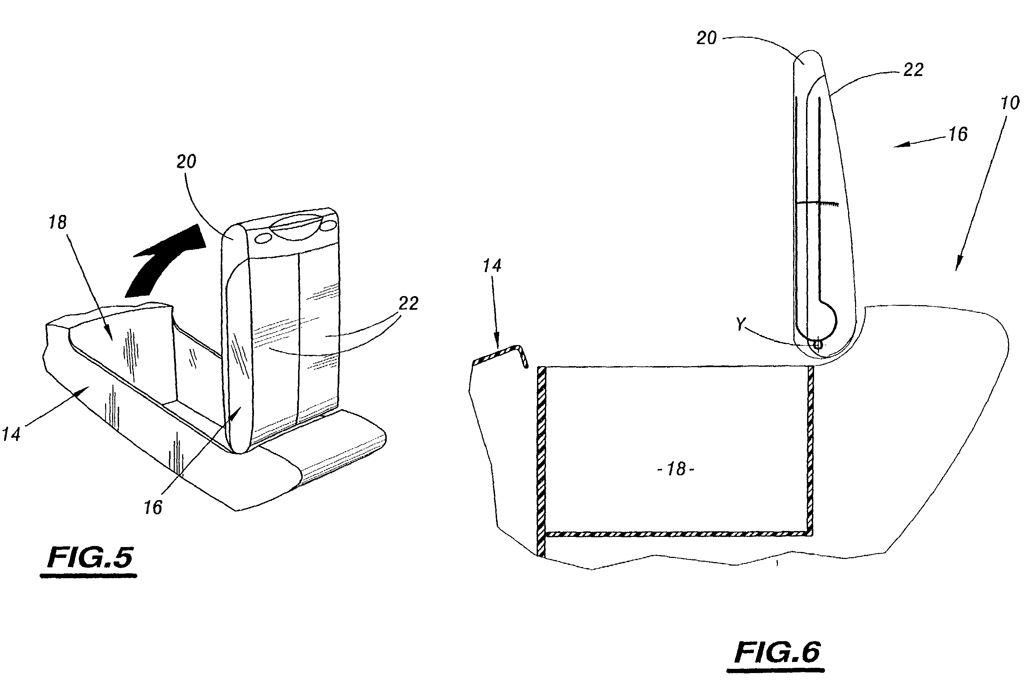

Partant de la position sensiblement horizontale de l'accoudoir 16 représentée aux figures 1 et 2, lorsque l'utilisateur souhaite accéder au réceptacle 18, il soulève l'embase 20, par exemple en la saisissant par son extrémité avant, de manière à faire pivoter l'ensemble de l'accoudoir 16 autour de l'axe Y, vers l'arrière de la console, jusqu'à atteindre la position sensiblement verticale de cet accoudoir 16 représentée sur les figures 5 et 6. Le réceptacle 18 est alors accessible. Bien entendu, l'ouverture de l'accoudoir 16 formant couvercle est possible quelque soit l'état de réglage des dispositifs 36.

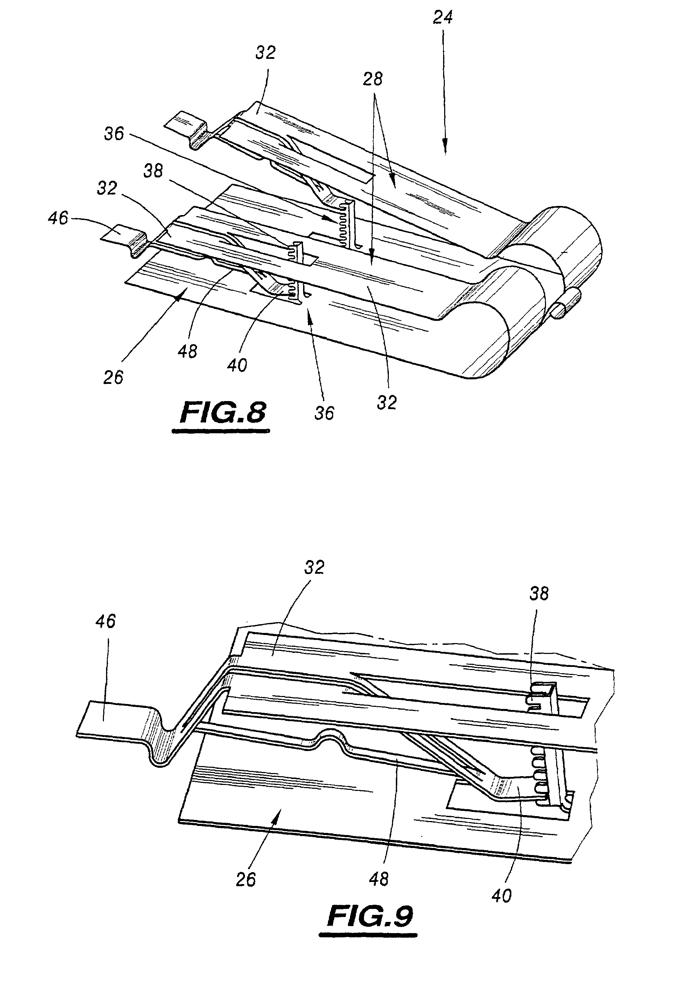

On a représenté sur les figures 8 et 9 une variante de réalisation de l'armature. Sur ces figures 8 et 9 les éléments analogues à ceux des figures précédentes sont désignés par des références identiques.

Dans cette variante, le cliquet 40 est ménagé dans une partie partiellement découpée d'une branche 32 de l'aile supérieure 28. La denture 38 est relativement rigide tandis que le cliquet 40 est rappelé élastiquement vers cette denture 38 par un effet ressort de la partie de la branche 32 portant ce cliquet 40.

Le cliquet 40 est écarté de la denture 38 au moyen d'un levier 46 destiné à tirer ce cliquet 40 à l'encontre de sa force élastique de rappel. Le levier 46 est relié au cliquet 40 par une tringle 48. Le levier 46 et la tringle 48 sont ménagés dans des parties partiellement découpées de la branche 32 de l'aile supérieure 28.

Le levier 46 peut être actionné par tout moyen classique porté par l'organe d'appui 22 correspondant.

L'accoudoir muni de l'armature selon la variante des figures 8 et 9 fonctionne mutatis mutandis de façon similaire à ce qui a été décrit précédemment.

L'invention ne se limite pas aux exemples de réalisation décrits précédemment.

En particulier, la console selon l'invention peut être agencée entre deux assises d'une banquette arrière du véhicule ou dans une portière du véhicule.

Les moyens d'écartement des deux ailes 26, 28 de la lame peuvent être constitués de manière à ne permettre que deux écartements possibles de ces ailes correspondant à deux positions abaissée et soulevée de l'organe d'appui.

La lame peut être fabriquée dans un matériau quelconque élastique permettant un effet ressort.

L'accoudoir formant couvercle peut être articulé sur le corps de la console par son extrémité arrière ou avant, ou encore peut être monté pivotant autour d'un axe sensiblement longitudinal de la console.

Enfin, la denture et le cliquet du dispositif d'écartement des deux ailes 26, 28 peuvent être rapportés sur ces ailes.

Parmi les avantages de l'invention on notera les suivants.

L'armature de la console selon l'invention, munie de deux ailes superposées, peut être fabriquée en une seule pièce avec le dispositif de réglage d'écartement des ailes. Ceci minimise notablement le nombre de pièces utilisées pour fabriquer une console à un ou deux accoudoirs réglables entre des positions abaissée et relevée de façon à s'adapter à des morphologies d'utilisateur différentes.

Par ailleurs, le fonctionnement des moyens de réglage de l'écartement des ailes de l'armature est très fiable.

## Revendications

1. Console pour un habitacle de véhicule automobile, du type s'étendant longitudinalement à proximité d'au moins un siège (12) du véhicule et comprenant un accoudoir (16), pour un occupant du siège, muni d'une embase (20) et d'au moins un organe (22) d'appui du coude de l'occupant, **caractérisée en ce que** l'accoudoir comprend
une armature comportant une lame (24) pliée de façon à présenter deux ailes sensiblement longitudinales inférieure (26) et supérieure (28) sollicitées élastiquement à l'écart l'une de l'autre par un effet ressort de la lame (24), l'aile inférieure (26) étant solidaire de l'embase (20), l'aile supérieure (28) étant solidaire de l'organe d'appui (22), et
des moyens de réglage (36) de l'écartement des deux ailes (26,28).

2. Console selon la revendication 1, **caractérisée en ce que** l'aile supérieure (28) est fendue longitudinalement de façon à présenter deux branches (32) sensiblement longitudinales, chaque branche (32) étant sollicitée élastiquement à l'écart de l'aile inférieure (26) par l'effet ressort de la lame (24) et portant un organe (22) d'appui de coude.

3. Console selon la revendication 1 ou 2, **caractérisée en ce que** les moyens de réglage d'écartement comprennent un dispositif de réglage discontinu (36) à denture (38) et cliquet (40), la denture (38) étant portée par une première des ailes (26) et s'étendant sensiblement verticalement entre les ailes inférieure (26) et supérieure (28), et le cliquet étant porté par la seconde des ailes (28).

4. Console selon la revendication 3, **caractérisée en ce que** la denture (38) et le cliquet (40) sont assujettis l'un à l'autre par une force élastique de rappel de la denture (38) ou du cliquet (40), les moyens de réglage comprenant de plus des moyens (42,44 ; 46,48) de séparation de la denture (38) et du cliquet (40) s'opposant à la force élastique de rappel de la denture (38) ou du cliquet (40).

5. Console selon les revendications 2 et 3 prises ensemble, **caractérisée en ce que** les moyens de réglage d'écartement comprennent un dispositif de réglage discontinu (36) associé à chaque branche (32) d'aile supérieure.

6. Console selon l'une quelconque des revendications 3 à 5, **caractérisée en ce que** la denture (38) et le cliquet (40) sont ménagés chacun dans une découpe d'aile (26,28) ou une partie d'aile (26,28) partiellement découpée.

7. Console selon la revendication 6, **caractérisée en ce que** la denture (38) est ménagée dans une partie partiellement découpée de l'aile (26) qui la porte redressée sensiblement verticalement.

8. Console selon la revendication 6 ou 7, **caractérisée en ce que** la denture (38) est ménagée dans une partie de la première des ailes (26) partiellement découpée et est rappelée élastiquement vers le cliquet (40) par un effet ressort de cette partie de la première des ailes (26), le cliquet (40) étant délimité par une découpe de la seconde des ailes (28).

9. Console selon la revendication 8, **caractérisée en ce que** la découpe est délimitée par une languette souple (45) partiellement découpée dans la seconde des ailes (28).

10. Console selon la revendication 8 ou 9, **caractérisée en ce que** les moyens de séparation de la denture (38) et du cliquet (40) comprennent des moyens (42) de traction de la denture (38), à l'encontre de sa force élastique de rappel, portés par l'embase (20).

11. Console selon la revendication 6 ou 7, **caractérisée en ce que** la denture (38) est ménagée dans une partie de la première des ailes (26) partiellement découpée, et **en ce que** le cliquet (40) est ménagé dans une partie de la seconde des ailes (28) partiellement découpée et est rappelé élastiquement vers la denture (38) par un effet ressort de cette partie de la seconde des ailes (28).

12. Console selon la revendication 11, **caractérisée en ce que** les moyens de séparation de la denture (38) et du cliquet (40) comprennent un levier (46) de traction du cliquet (40) à l'encontre de sa force élastique de rappel relié à ce cliquet (40) par une tringle (48), le levier (46) et la tringle (48) étant ménagés dans des parties partiellement découpées de la seconde des ailes (28).

13. Console selon l'une quelconque des revendications précédentes, **caractérisée en ce que** l'accoudoir (16) forme un couvercle d'obturation d'un réceptacle (18) agencé dans la console (10), la lame (24) étant articulée autour d'un axe (Y) sensiblement transversal à la console (10) et lié à un corps (14) de cette console (10).

14. Console selon la revendication 13, **caractérisée en ce que** la lame (24) est montée pivotante autour de son axe d'articulation (Y) au moyen d'un palier (34) ménagé dans une partie partiellement découpée de cette lame, à proximité de la jonction des deux ailes (26, 28).

15. Console selon l'une quelconque des revendications précédentes, **caractérisée en ce que** la lame (24) est métallique, notamment en acier à ressort.

16. Véhicule automobile **caractérisé en ce qu'**il est muni d'une console selon l'une quelconque des revendications précédentes.

## Patentansprüche

1. Konsole für einen Kraftfahrzeuginnenraum der Art, die sich in Längsrichtung in der Nähe zumindest eines Sitzes (12) des Fahrzeugs erstreckt, und die eine Armlehne (16) für eine Person auf dem Sitz umfasst, und welche mit einem Befestigungssockel (20) und zumindest einem Auflageorgan (22) für den Ellenbogen der sitzenden Person versehen ist, **dadurch gekennzeichnet, dass** die Armlehne umfasst:
eine Armierung mit einem derart umgebogenen Blatt (24), dass es zwei praktisch sich in Längsrichtung erstreckende Flügel aufweist, und zwar einen unteren (26) und einen oberen (28), welche durch eine Federwirkung des Blattes (24) elastisch voneinander weg gespannt sind, wobei der untere Flügel (26) einstückig mit dem Befestigungssockel (20) und der obere Flügel (28) einstückig mit dem Auflageorgan (22) ausgebildet ist, und
Vorrichtungen zur Einstellung (36) der Beabstandung der beiden Flügel (26, 28).

2. Konsole gemäß Anspruch 1, **dadurch gekennzeichnet, dass** der obere Flügel (28) in Längsrichtung derart gespalten ist, dass er zwei sich praktisch in Längsrichtung erstreckende Arme (32) aufweist, wobei jeder Arm (32) durch die Federwirkung des Blattes (24) elastisch in Abstand von dem unterem Flügel (26) gespannt ist und ein Auflageorgan (22) für den Ellenbogen trägt.

3. Konsole gemäß Anspruch 1 oder 2, **dadurch gekennzeichnet, dass** die Vorrichtungen zur Einstellung der Beabstandung eine diskontinuierliche Einstellvorrichtung (36) mit Verzahnung (38) und Sperrklinke (40) umfassen, wobei die Verzahnung (38) von einem ersten der Flügel (26) getragen ist und sich praktisch vertikal zwischen dem unteren (26) und oberen (28) Flügel erstreckt, und wobei die Sperrklinke von dem zweiten der Flügel (28) getragen ist.

4. Konsole gemäß Anspruch 3, **dadurch gekennzeichnet, dass** die Verzahnung (38) und die Sperrklinke (40) miteinander durch eine elastische Rücklaufkraft der Verzahnung (38) oder der Sperrklinke (40) befestigt sind, wobei die Einstellvorrichtungen zudem Vorrichtungen (42, 44; 46, 48) zum Trennen der Verzahnung (38) und der Sperrklinke (40) aufweisen, die entgegen der elastischen Rücklaufkraft der Verzahnung (38) oder der Sperrklinke (40) wirken.

5. Konsole gemäß den Ansprüchen 2 und 3 zusammen, **dadurch gekennzeichnet, dass** die Einstellvorrichtungen für die Beabstandung eine diskontinuierliche Einstellvorrichtung (36) aufweisen, die mit jedem Arm (32) des oberen Flügels verbunden ist.

6. Konsole gemäß irgendeinem der Ansprüche 3 bis 5, **dadurch gekennzeichnet, dass** die Verzahnung (38) und die Sperrklinke (40) jeweils in einem Flügelausschnitt (26, 28) oder in einem teilweise ausgeschnittenen Flügelbereich (26, 28) angeordnet sind.

7. Konsole gemäß Anspruch 6, **dadurch gekennzeichnet, dass** die Verzahnung (38) in einem teilweise ausgeschnittenen Bereich des Flügels (26) angeordnet ist, der sie in praktisch vertikal aufgerichteter Position trägt.

8. Konsole gemäß Anspruch 6 oder 7, **dadurch gekennzeichnet, dass** die Verzahnung (38) in einem Bereich des teilweise ausgeschnittenen ersten der Flügel (26) angeordnet ist und durch eine Federwirkung dieses Bereiches des ersten der Flügel (26) elastisch zu der Sperrklinke (40) hin zurück gezogen wird, wobei die Sperrklinke (40) durch einen Ausschnitt in dem zweiten der Flügel (28) begrenzt ist.

9. Konsole gemäß Anspruch 8, **dadurch gekennzeichnet, dass** der Ausschnitt durch eine teilweise aus dem zweiten der Flügel (28) ausgeschnittene, biegsame Lasche (45) begrenzt ist.

10. Konsole gemäß Anspruch 8 oder 9, **dadurch gekennzeichnet, dass** die Vorrichtungen zum Trennen der Verzahnung (38) und der Sperrklinke (40) von dem Befestigungssockel (20) getragene Vorrichtungen (42) zum Ziehen der Verzahnung (38) entgegen ihre elastische Rücklaufkraft aufweisen.

11. Konsole gemäß Anspruch 6 oder 7, **dadurch gekennzeichnet, dass** die Verzahnung (38) in einem Bereich des teilweise ausgeschnittenen ersten der Flügel (26) angeordnet ist, und dass die Sperrklinke (40) in einem Bereich des teilweise ausgeschnittenen zweiten der Flügel (28) angeordnet ist und durch eine Federwirkung dieses Bereiches des zweiten der Flügel elastisch zu der Verzahnung (28) hin zurück gezogen wird.

12. Konsole gemäß Anspruch 11, **dadurch gekennzeichnet, dass** die Vorrichtungen zum Trennen der Verzahnung (38) und der Sperrklinke (40) einen Hebel (46) zum Ziehen der Sperrklinke (40) entgegen ihre elastische Rücklaufkraft umfassen, welcher mit dieser Sperrklinke (40) über eine kleine Stange (48) verbunden ist, wobei der Hebel (46) und die Stange (48) in den teilweise ausgeschnittenen Bereichen des zweiten der Flügel (28) angeordnet sind.

13. Konsole gemäß irgendeinem der vorherigen Ansprüche, **dadurch gekennzeichnet, dass** die Armlehne (16) eine Verschlussdeckel für einen in der Konsole (10) ausgebildeten Behälter (18) bildet, wobei das Blatt (24) gelenkig um eine praktisch quer zu der Konsole (10) liegende Achse (Y) angebracht und mit einem Körper (14) dieser Konsole (10) verbunden ist.

14. Konsole gemäß Anspruch 13, **dadurch gekennzeichnet, dass** das Blatt (24) schwenkbar um seine Gelenkachse (Y) mittels eines Lagers (34) angebracht ist, welches in einem teilweise aus diesem Blatt ausgeschnittenen Bereich in der Nähe der Verbindungsstelle der beiden Flügel (26, 28) angeordnet ist.

15. Konsole gemäß irgendeinem der vorherigen Ansprüche, **dadurch gekennzeichnet, dass** das Blatt (24) aus Metall besteht, insbesondere aus Federstahl.

16. Kraftfahrzeug, **dadurch gekennzeichnet, dass** es mit einer Konsole gemäß irgendeinem der vorherigen Ansprüche ausgestattet ist.

## Claims

1. Console for a motor vehicle interior, of the type extending longitudinally in proximity to at least one seat (12) of the vehicle and comprising an armrest (16), for an occupant of the seat, provided with a base (20) and at least one member (22) for supporting the occupant's elbow, **characterised in that** the armrest comprises
a frame having a strip (24) bent so as to have two substantially longitudinal legs, lower (26) and upper (28), elastically biased away from one another by a spring effect of the strip (24), the lower leg (26) being secured to the base (20), the upper leg (28) being secured to the support member (22), and
means for adjustment (36) of the spacing of the two legs (26,28).

2. Console according to Claim 1, **characterised in that** the upper leg (28) is split longitudinally so as to have two substantially longitudinal branches (32), each branch (32) being elastically biased away from the lower leg (26) by the spring effect of the strip (24) and bearing an elbow-supporting member (22).

3. Console according to Claim 1 or 2, **characterised in that** the spacing adjustment means comprise a discontinuous adjustment device (36) with toothing (38) and detent pawl (40), the toothing (38) being borne by a first of the legs (26) and extending substantially vertically between the lower leg (26) and upper leg (28), and the detent pawl being borne by the second of the legs (28).

4. Console according to Claim 3, **characterised in that** the toothing (38) and the detent pawl (40) are fixed to one another by an elastic return force of the toothing (38) or of the detent pawl (40), the adjustment means further comprising means (42,44; 46,48) for separating the toothing (38) and the detent pawl (40), opposing the elastic return force of the toothing (38) or the detent pawl (40).

5. Console according to Claims 2 and 3 taken together, **characterised in that** the spacing adjustment means comprise a discontinuous adjustment device (36) associated with each upper-leg branch (32).

6. Console according to any one of Claims 3 to 5, **characterised in that** the toothing (38) and the detent pawl (40) are each formed in a leg cutout (26,28) or a partially cut-out leg (26,28) part.

7. Console according to Claim 6, **characterised in that** the toothing (38) is formed in a partially cut-out, substantially vertically raised part of the leg (26) which bears it.

8. Console according to Claim 6 or 7, **characterised in that** the toothing (38) is formed in a partially cut-out part of the first of the legs (26) and is elastically returned to the detent pawl (40) by a spring effect of this part of the first of the legs (26), the detent pawl (40) being delimited by a cutout of the second of the legs (28).

9. Console according to Claim 8, **characterised in that** the cutout is delimited by a flexible tongue (45) partially cut-out of the second of the legs (28).

10. Console according to Claim 8 or 9, **characterised in that** the means for separating the toothing (38) and the detent pawl (40) comprise means (42) for pulling the toothing (38) counter to its elastic return force, which are borne by the base (20).

11. Console according to Claim 6 or 7, **characterised in that** the toothing (38) is formed in a partially cut-out part of the first of the legs (26), and **in that** the detent pawl (40) is formed in a partially cut-out part of the second of the legs (28) and is elastically returned to the toothing (38) by a spring effect of this part of the second of the legs (28).

12. Console according to Claim 11, **characterised in that** the means for separating the toothing (38) and the detent pawl (40) comprise a lever (46) for pulling the detent pawl (40) counter to its elastic return force, which is connected to this detent pawl (40) by a link (48), the lever (46) and the link (48) being formed in partially cut-out parts of the second of the legs (28).

13. Console according to any one of the preceding claims, **characterised in that** the armrest (16) forms a cover for closing off a receptacle (18) arranged in the console (10), the strip (24) being articulated about an axis (Y) which is substantially transverse to the console (10) and is linked to a body (14) of this console (10).

14. Console according to Claim 13, **characterised in that** the strip (24) is mounted to pivot about its articulation axis (Y) by means of a bearing (34) formed in a partially cut-out part of this strip, in proximity to the junction of the two legs (26,28).

15. Console according to any one of the preceding claims, **characterised in that** the strip (24) is made of metal, in particular of spring steel.

16. Motor vehicle, **characterised in that** it is provided with a console according to any one of the preceding claims.
